# EUROPEAN PATENT APPLICATION

(11) **EP 2 784 910 A1**
(43) Date of publication of application: **01.10.2014**
(21) Application number: 13161129.5
(22) Date of filing: 26.03.2013
(51) Int. Cl.: H02K 3/24, H02K 3/50, H02K 15/00

(54) **An insulator assembly and a method of making the insulator assembly**

(71) Applicant: Siemens Aktiengesellschaft, 80333 München (DE)
(72) Inventor: Jaluthariya, Mukesh Kumar, 302012 Jaipur (IN); Majernik, Thomas M., Pittsburgh, PA, 15239 (US); Pal, Siddhartha, 110075 Delhi (IN); Singh, Narendra, 122001 Gurgaon (IN)

(57) **Abstract**

An insulation assembly (1) includes a side support (4) for being placed onto a side of a strand (5) of the connector (3), a vent piece (6) for being placed over an header (7) of the coil to form a vent channel for allowing gas flow to and fro the header (7) of the coil (2), an insulation wrapper (8) enclosing the side support (4) and the vent piece (6), such that the side support (4) is physically coupled to the vent piece (6) to form an enclosure. The enclosure so formed encloses the connection when placed onto the connection.

## Description

The invention relates to insulating a connection of a connector and a coil. More specifically, the invention relates to insulating the connection of the connector and the coil.

In rotating machineries, the connections are required to be insulated properly. During stator rewinding process, the insulation is being done in the field and the maintenance personnel's require insulating the connections.

Such insulation requires a great amount of critical path schedule time. Generally, at first assembly of separator and side supports is done which include multiple steps to create the assembly, like inserting separator with resin impregnated Dacron between header halves of a coil and strands of the coil, covering inlet of the header with teflon tape, bonding side support to the strand of the coil using Dacron and resin, banding the block of coils with glass tape, etc. Further, the vent channel is assembled to the header of the coil which involves applying Dacron layer onto the surface of the header of the coil and the vent channel, placing vent channel onto the coil, banding of vent channel to the header of the coil using glass tape, etc. Later, insulation covers are assembled onto the connection by using Dacron & resins between connector and insulation cover, using filler items along with Dacron and resin between sides of coil and insulation cover; additional filler items in cases where offset is left between connection, etc. Lastly, insulation cover is banded to the connection.

As per the current processes many different components are required in the insulation process of coil connections. Also, such insulations can be executed by a field expert as lot of care and precision is required for each step of the insulation process.

The object of the invention is to ease insulation of the connections of a coil.

The object of the invention is achieved by insulation assembly of claim 1 and a method to make the insulation assembly of claim 7.

According to one embodiment of the insulation assembly, the insulation assembly includes a side support for being placed onto a side of a strand of the connector, a vent piece for being placed over an header of the coil to form a vent channel for allowing gas flow to and fro the header of the coil, an insulation wrapper enclosing the side support and the vent piece, such that the side plate is geometrically coupled to the vent channel to form an enclosure. The enclosure so formed encloses the connection when placed onto the connection. The insulation assembly includes two parts, such that the two parts are adapted to be geometrically aligned to form the enclosure. This eases placement of enclosure onto the connection.

According to another embodiment of the insulation assembly, the insulator assembly is adapted to enclose a pair of coils. This provides for insulation of the coils which are required to be insulated together.

According to yet another embodiment of the insulation assembly, wherein one part of the insulation assembly is adapted to enclose the coil partially. It provides an easy way to place the insulation assembly onto the connections to enclose the connections.

According to one embodiment of the insulation assembly, the insulation assembly further includes an extender adapted to be physically coupled to insulation wrappers of two parts of the insulation assembly to form the enclosure. In cases, when the coil is of variable sizes, or in cases when pair of coils placed wide apart are required to be enclosed, such an extender helps to form a enclosure completely enclosing the coil or pair of coils, as the case may be.

According to yet another embodiment of the insulation assembly, wherein the pair of coils is connection of coils of a generator. Such insulation assembly has an application for coils in generator which tends to be heated and requires lot of efforts for insulation of the connection of coils and connectors.
FIG 1 shows a connection of a connector and a pair of coils.
FIG 2 shows an insulation assembly.
FIG 3 shows the connections of pair of coils enclosed in an enclosure of the insulation assembly

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

Prior to explaining functioning of the system through various embodiments, some of the terminology used herein will be explained.

"Coil" and "Header of coil": Coil is referred to a conductor which forms an inductor or electromagnet by being wound around a core in loops and the header of the coil is a part of the coil which extends in or out of the winding of the coil.

"Connector" and "Strand of the connector": Connector is an electro-mechanical device for joining two or more ends of coil/s as an interface using a mechanical assembly. The connection may be temporary, as for portable equipment, require a tool for assembly and removal, or serve as a permanent electrical joint between two or more ends of coil/s. To join an end of a wire to the connector, a strand of connector is used so that the end of wire or header of coil is electrical and/or mechanical cooperation with the connector.

"Insulation assembly", "side support", "vent piece", "insulation wrapper" and "extender": Insulation assembly is an enclosure for enclosing connections of connector and coil for insulating the connection. The insulation assembly includes side support to be placed onto a side of a strand of the connector, a vent piece to be placed over a header of the coil to form a vent channel and an insulation wrapper which encloses the side support and the vent piece to form the enclosure for enclosing the connection. In cases, where the insulation wrapper cannot completely cover the connection, the extender is physically coupled to the insulation wrappers to complete the enclosure.

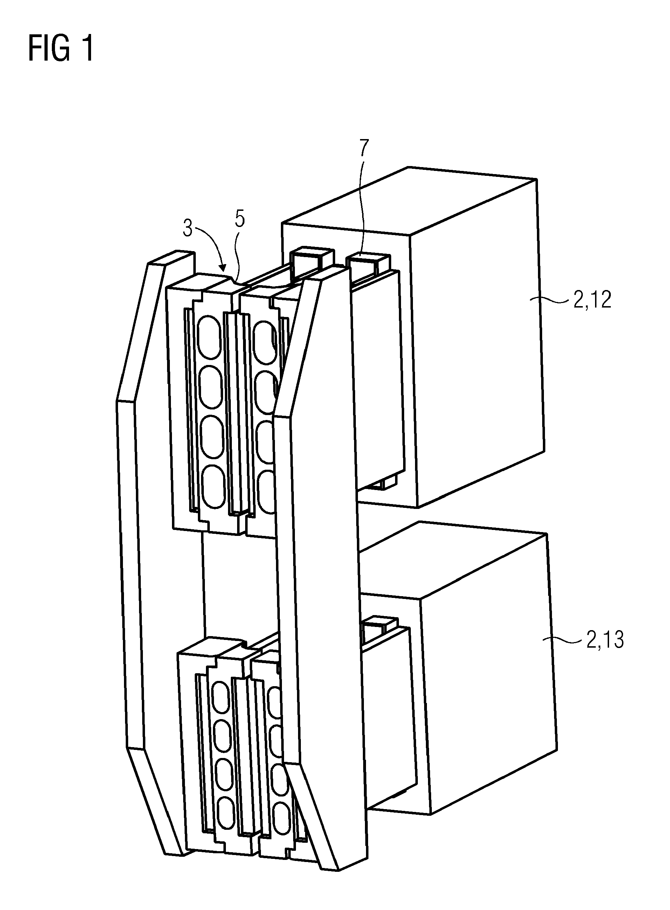

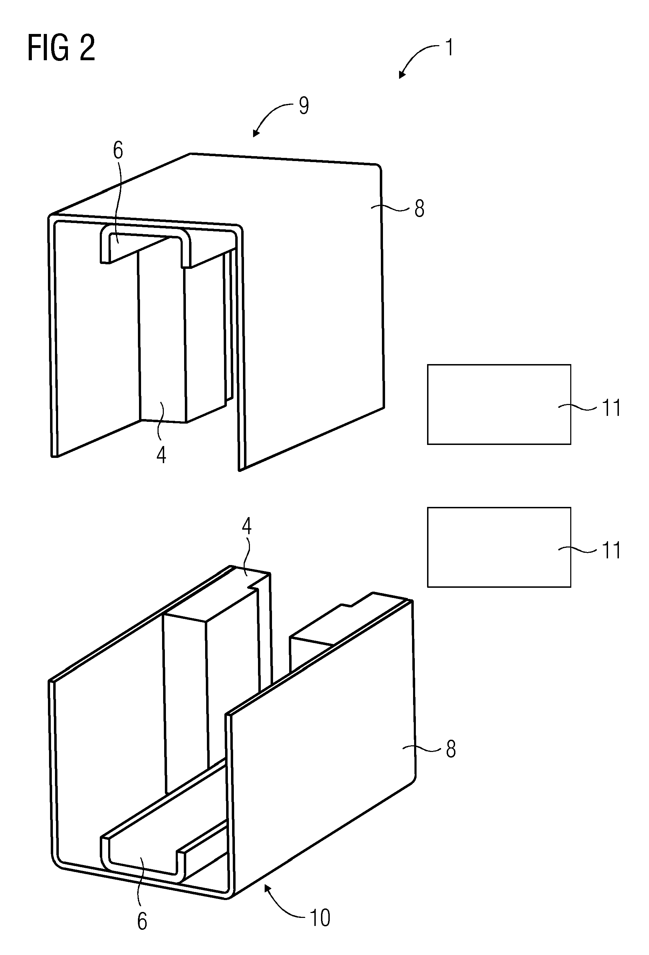

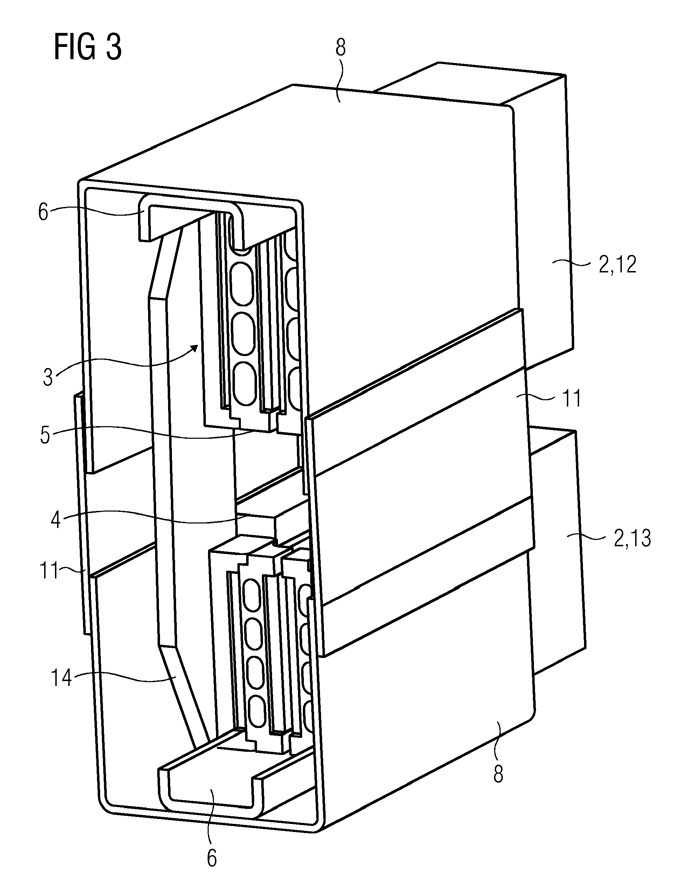

FIG 1 shows a connection of two ends of a coil 2 with corresponding connectors 3. The ends of the coil 2 connect to the connectors 3 via headers 7 of the coils 2 to the strands 5 of the connectors 3. These ends of the coil 2 are insulated using insulation assembly 1 of FIG 2 and as shown in FIG 3. In an alternate embodiment, in spite of the ends of coil 2, ends of two different of coils 2 can be connected to the corresponding connectors 3 and the connections so formed can be insulated using insulation assembly 1 of FIG 2 and as shown in FIG 3. In yet alternate embodiment, ends of multiple coils 2 can be connected to the corresponding connectors 3 and the connections so formed can be insulated using insulation assembly 1 of FIG 2 and as shown in FIG 3.

FIG 2 shows the insulation assembly 1 which constitutes an insulation wrapper 8, a side support 4, a vent piece 6 and an extender 11. The insulation assembly is divided into two parts 9, 10. The two parts 9, 10 are physically coupled to the extenders 11 to form the enclosure. To form the enclosure, each of the two parts 9, 10 is either fixed temporarily or permanently to extenders 11 via insulation wrapper 8 such that the enclosure is formed to fit in the two connections. Such enclosure can either be formed at the factory itself or can be formed by the service engineer who is either installing the insulation assembly 1 or servicing the connection. The extenders 11 are used here to compromise the offset between the two ends of the coil 2. In another embodiment, like where either only one connection is to be insulated, the insulation assembly 1 needs not to be divided into two parts 9, 10; rather the insulation assembly 1 can be of one piece. In cases, when the insulation assembly 1 is made of two parts 9, 10, the placement or formation of the enclosure can be done either by pre-forming the enclosure by physically coupling the two parts 9, 10 and then fitting it onto the connection, or by placing firstly each of the parts 9, 10 onto each of the connections and then physically coupling the two parts 9, 10 to make the fit between the connections and the insulation assembly 1. In cases when the insulation assembly 1 is made of one piece, only possible way to enclose the connections is by placing the whole assembly 1 onto the connection with no room for any kind of adjustments to create the fit between the connection and the insulation assembly 1.

FIG 3 shows two connections being enclosed within the insulation assembly 1, such that the first part 9 of the insulation assembly is placed onto the first connection 12 and the second part 10 of the insulation assembly 1 is placed onto the second connection 12, and further the insulation assembly 1 is supplied with two extenders 11 to complete the enclosure. The parts 9, 10 include the side support 4, insulation wrapper 8 and the vent pieces 6. The parts 9, 10 along with extender 11 form the enclosure and enclose the connections. The side support 4 is coupled to the strand 5 of the connector 3 and the vent piece 6 is placed over a header 7 of the coil 2 to form a vent channel. The vent channel allows gas flow to and fro the header of the coil.

## Claims

1. An insulator assembly (1) for insulating connection of a coil (2) and a connector (3), the insulator assembly (1) comprising:
- a side support (4) adapted to be coupled to a strand (5) of the connector (3);
- a vent piece (6) adapted to be placed over an header (7) of the coil (2) to form a vent channel;
- an insulation wrapper (8) enclosing the side support (4) and the vent piece (6), such that the side support (4) is geometrically coupled to the vent piece (6) to form an enclosure,
- the enclosure is adapted to enclose the connection, such that the vent piece (6) is placed on the header (7) of the coil (2) to form the vent channel and the side support (4) is placed onto the strand (5) of the connector (3).

2. The insulator assembly (1) according to the claim 1, wherein the insulation assembly (1) comprises of two parts (9, 10), such that the two parts (9, 10) are adapted to be geometrically aligned to form the enclosure.

3. The insulator assembly (1) according to any of the claims 1 or 2,
wherein the insulator assembly (1) is adapted to enclose a pair of coils (2, 12, 13).

4. The insulator assembly (1) according to any of the claims 2 or 3,
wherein one part of the insulation assembly is adapted to enclose the coil partially.

5. The insulator assembly according to any of the claims 2 to 4 comprising:
- a extender (11) adapted to be physically coupled to insulation wrappers (8) of two parts (9, 10) of the insulation assembly (1) to form the enclosure.

6. The insulator assembly according to claims 3 to 5, wherein the pair of coils (2, 12, 13) are coils of a generator.

7. A method to make an insulator assembly (1) for insulating connection of a coil (2) and a connector (3), the method comprising:
- enclosing a side support (4) and a vent piece (6) into an insulation wrapper (8), such that the side support (4) is geometrically coupled to the vent piece (6) to form an enclosure,
Wherein the enclosure is adapted to enclose the connection, such that the vent piece (6) is placed on the header (7) of the coil (2) to form a vent channel and the side support (4) is placed onto the strand (5) of the connector (3).

8. The method according to the claim 7 comprises:
- making the insulation assembly (1) in two part (9, 10) by enclosing the side support (4) and the vent piece (6) into the insulation wrapper (8) to form each part,
wherein each of the two parts (9, 10) is adapted to be physically coupled to each other to form the enclosure.

9. The method according to the claim 8,
wherein one part (9, 10) of the insulation assembly (1) is adapted to enclose the coil (2) partially.

10. The method according to any of the claims 8 or 9 comprising:
- physically coupling the insulation wrappers (8) of two parts (9, 10) of the insulation assembly (1) via an extender (11) to form the enclosure.
